# EUROPEAN PATENT APPLICATION

(11) **EP 4 841 805 A1**
(43) Date of publication of application: **18.11.2026**
(21) Application number: 26178857.4
(22) Date of filing: 15.05.2026
(51) Int. Cl.: H01M 50/533, H01M 50/536, H01M 50/538, H01M 50/54

(54) **SECONDARY BATTERY AND METHOD OF MANUFACTURING SECONDARY BATTERY**

(30) Priority: 16.05.2025 KR 20250063942
(71) Applicant: Hanwha Momentum Co., Ltd., Seongnam-si, Gyeonggi-do 13494 (KR)
(72) Inventor: CHOI, Young Bong, 13494 Seongnam-si, Gyeonggi-do (KR)
(74) Representative: Patentanwälte Olbricht Buchhold Keulertz

(57) **Abstract**

A secondary battery 10 includes at least one electrode assembly 100 including a plurality of electrode plates 110, 120, which include a plurality of tabs 140, 180, and a plurality of separators 130 between the plurality of electrode plates 110, 120, and at least one connector 200 connected to the plurality of tabs 140, 180. Some of the plurality of tabs 140, 180 are bent in a first bending direction, and the others of the plurality of tabs 140, 180 are bent in a second bending direction different from the first bending direction, the at least one connector 200 is welded on the plurality of tabs 140, 180 that are bent, and ends of the plurality of tabs 140, 180 do not protrude to outside of the at least one electrode assembly 100 in a first direction parallel to a width direction of the at least one electrode assembly 100.

## Description

### CROSS-REFERENCE TO RELATED APPLICATIONS

This application is based on and claims priority under 35 U.S.C. §119 to Korean Patent Application No. 10-2025-0063942, filed on May 16, 2025, in the Ministry of Intellectual Property, Republic of Korea, the disclosures of which are incorporated herein by reference in their entirety.

### BACKGROUND

The disclosure relates to a secondary battery and a method of manufacturing the secondary battery.

A secondary battery is manufactured by manufacturing electrode plates, stacking or winding the manufactured electrode plates, and connecting tabs and connectors. A tab is a non-coating region of the electrode plate to which an active material is not applied and serves as a passage for electrically connecting the electrode plate to the connector.

In a secondary battery of the related art, a tab extending in one direction is bent by using a jig and connected to a connector, and when the tab is pressed by the jig and deformed in shape, the thickness of an end of the tab is inevitably increased. Accordingly, there is an inconvenience in that the end of the tab needs to be cut such that the tab does not protrude to the outside of an electrode assembly or the tab needs to be bent over a connector and taped. A cutting process or a taping process not only lowers productivity, but also poses the risk of foreign substances generated during the process flowing into the electrode assembly. In addition, the end of the tab becomes too thick, and thus, a welding depth is not constant, resulting in poor welding quality.

The background described above is intended to help understanding of the disclosure, and does not necessarily refer to a known technology or a technology generally known in the art. The description of the background does not limit the technical scope or claims of the disclosure in any way.

### SUMMARY

Provided are a secondary battery and a method of manufacturing the secondary battery, in which efficiency of a manufacturing process of the secondary battery and improvement of welding quality may be promoted and capacity of the secondary battery may be improved.

Additional aspects will be set forth in part in the description which follows and, in part, will be apparent from the description, or may be learned by practice of the presented embodiments of the disclosure.

A secondary battery according to an embodiment includes at least one electrode assembly including a plurality of electrode plates, which include a plurality of tabs, and a plurality of separators between the plurality of electrode plates, and at least one connector connected to the plurality of tabs, wherein some of the plurality of tabs are bent in a first bending direction, and the others of the plurality of tabs are bent in a second bending direction different from the first bending direction, the at least one connector is welded on the plurality of tabs that are bent, and ends of the plurality of tabs do not protrude to outside of the at least one electrode assembly in a first direction parallel to a width direction of the at least one electrode assembly.

Some of the plurality of tabs may be located on a first imaginary line extending in a second direction different from the first direction, and the others of the plurality of tabs may be located on a second imaginary line spaced apart from the first imaginary line in the first direction and parallel to the first imaginary line, and from among the plurality of tabs, a direction in which tabs on the first imaginary line are bent may be different from a direction in which tabs on the second imaginary line are bent.

The at least one electrode assembly may include a first electrode assembly including a plurality of electrode plates and a plurality of separators between the plurality of electrode plates, the plurality of electrode plates including a first positive electrode tab and a first negative electrode tab, and a second electrode assembly including a plurality of electrode plates and a plurality of separators between the plurality of electrode plates, the plurality of electrode plates including a second positive electrode tab and a second negative electrode tab, the first positive electrode tab and the first negative electrode tab may be located on the first imaginary line, and the second positive electrode tab and the second negative electrode tab may be located on the second imaginary line.

The plurality of tabs may extend from the plurality of electrode plates in the same direction, or some of the plurality of tabs may extend from the plurality of electrode plates in one direction, and the others of the plurality of tabs may extend from the plurality of electrode plates in a direction different from the one direction.

A length of each of the plurality of tabs in the first direction may be less than or equal to a width of the at least one electrode assembly.

The at least one electrode assembly may include a first electrode assembly including a plurality of electrode plates and a plurality of separators between the plurality of electrode plates, the plurality of electrode plates including a first positive electrode tab and a first negative electrode tab, and a second electrode assembly including a plurality of electrode plates and a plurality of separators between the plurality of electrode plates, the plurality of electrode plates including a second positive electrode tab and a second negative electrode tab, the at least one connector may include a first connector connected to the first positive electrode tab and the second positive electrode tab, and a second connector connected to the first negative electrode tab and the second negative electrode tab, and bent ends of the first positive electrode tab and first negative electrode tab may not protrude to outside of the second electrode assembly, and bent ends of the second positive electrode tab and second negative electrode tab may not protrude to outside of the first electrode assembly.

The at least one electrode assembly may further include a third electrode assembly adjacent to the second electrode assembly and including a plurality of electrode plates including a third positive electrode tab and a third negative electrode tab, and a plurality of separators between the plurality of electrode plates, the first connector may be connected to the first positive electrode tab, the second positive electrode tab, and the third positive electrode tab, the second connector may be connected to the first negative electrode tab, the second negative electrode tab, and the third negative electrode tab, and the third positive electrode tab and the third negative electrode tab may be bent toward the first electrode assembly, wherein bent ends thereof may not protrude to outside of the first electrode assembly.

The at least one electrode assembly may include an electrode assembly including a plurality of electrode plates and a plurality of separators between the plurality of electrode plates, the plurality of electrode plates including a first positive electrode tab, a first negative electrode tab, a second positive electrode tab, and a second negative electrode tab, the at least one connector may include a first connector connected to the first positive electrode tab and the second positive electrode tab, and a second connector connected to the first negative electrode tab and the second negative electrode tab, and bent ends of the first positive electrode tab, first negative electrode tab, second positive electrode tab, and second negative electrode tab may not protrude to outside of the electrode assembly.

The plurality of tabs may respectively extend from the plurality of electrode plates and the at least one electrode assembly may include at least one extension region defined by an outer edge of the at least one electrode assembly, and the plurality of tabs may not extend beyond the at least one extension region.

The at least one extension region may be located on an upper surface or a side surface of the at least one electrode assembly.

A method of manufacturing a secondary battery, according to an embodiment, includes preparing at least one electrode assembly including a plurality of electrode plates, which include a plurality of tabs, and a plurality of separators between the plurality of electrode plates, bending the plurality of tabs, and welding at least one connector on the plurality of tabs that are bent, wherein the bending of the plurality of tabs includes bending some of the plurality of tabs in a first bending direction, bending the others of the plurality of tabs in a second bending direction different from the first bending direction, and preventing ends of the plurality of tabs from protruding to outside of the at least one electrode assembly in a first direction parallel to a width direction of the at least one electrode assembly.

The bending of the plurality of tabs may include, from among the plurality of tabs, bending tabs having different polarities in the first bending direction, and bending tabs having a same polarity in the second bending direction.

The at least one electrode assembly may include a first electrode assembly including a plurality of electrode plates and a plurality of separators between the plurality of electrode plates, the plurality of electrode plates including a first positive electrode tab and a first negative electrode tab, and a second electrode assembly including a plurality of electrode plates and a plurality of separators between the plurality of electrode plates, the plurality of electrode plates including a second positive electrode tab and a second negative electrode tab, the at least one connector may include a first connector connected to the first positive electrode tab and the second positive electrode tab, and a second connector connected to the first negative electrode tab and the second negative electrode tab, and the bending of the plurality of tabs may include preventing bent ends of the first positive electrode tab and first negative electrode tab from protruding to outside of the second electrode assembly, and preventing bent ends of the second positive electrode tab and second negative electrode tab from protruding to outside of the first electrode assembly.

The at least one electrode assembly may include an electrode assembly including a plurality of electrode plates and a plurality of separators between the plurality of electrode plates, the plurality of electrode plates including a first positive electrode tab, a first negative electrode tab, a second positive electrode tab, and a second negative electrode tab, the at least one connector may include a first connector connected to the first positive electrode tab and the second positive electrode tab, and a second connector connected to the first negative electrode tab and the second negative electrode tab, and the bending of the plurality of tabs may include preventing bent ends of the first positive electrode tab, first negative electrode tab, second positive electrode tab, and second negative electrode tab from protruding to outside of the electrode assembly.

The bending of the plurality of tabs may include moving a jig in the first bending direction to bend a first tab from among the plurality of tabs, without pressing the first tab in a direction different from the first bending direction, and moving the jig in the second bending direction to bend a second tab from among the plurality of tabs, without pressing the second tab in a direction different from the second bending direction.

The embodiments described above are only examples, and the disclosure may be variously modified and applied by one of ordinary skill in the art without departing from the technical scope of the disclosure. Therefore, the disclosure should not be construed as being limited to the above-described embodiments, and all configurations based on the scope of the disclosure are included in the scope of protection of the disclosure.

### BRIEF DESCRIPTION OF THE DRAWINGS

The above and other aspects, features, and advantages of certain embodiments will be more apparent from the following description taken in conjunction with the accompanying drawings, in which:
FIG. 1 is an exploded perspective view of a secondary battery according to an embodiment;
FIG. 2 is a perspective view of an electrode assembly according to an embodiment;
FIGS. 3A and 3B are cross-sectional views of an electrode assembly according to embodiments;
FIG. 4 is a plan view of an electrode assembly according to an embodiment;
FIGS. 5A and 5B are side views of an electrode assembly according to embodiments;
FIGS. 6 to 10 are perspective views of an electrode assembly according to other embodiments;
FIG. 11 is a plan view of an electrode assembly according to another embodiment;
FIGS. 12A, 12B, 12C, 12D, 12E, 12F, and 13 illustrate a method of manufacturing an electrode assembly, according to embodiments; and
FIGS. 14A and 14B illustrate a method of manufacturing an electrode assembly according to the related art.

### DETAILED DESCRIPTION

Embodiments and methods of achieving the same will be more easily understood with reference to the detailed description of the embodiments together with accompanying drawings. Hereinafter, embodiments will be described in detail with reference to accompanying drawings. However, the described embodiments may be variously modified and implemented in other forms, and are not construed as being limited to the embodiments described herein. In addition, each feature of various embodiments may be combined with each other in whole or in part, and the embodiments may be implemented independently of each other or may be implemented together in combination. It should be understood that the disclosure includes all modifications and equivalents.

Unless otherwise stated, the same reference numerals denote the same elements throughout accompanying drawings and the description thereof, and redundant descriptions will be omitted. In drawings, relative sizes of elements, regions, and the like may be exaggerated for clarity, and shapes shown in drawings do not limit an actual shape of an apparatus.

In the present specification, spatially relative terms, such as "below," "above," "lower," and "upper," are not limited to directions shown in drawings, and are intended to include various directions of an apparatus in use or operation. For example, when an apparatus in a drawing is turned upside down, an element described as "below" may be "above" another element. Likewise, the term "stack" or "overlap" includes stacking, extending, covering, or partially covering, and the expression "not overlap" may include the same meaning as "spaced apart".

When an element is referred to as being "formed," "connected," or "coupled" to another element, the element may be directly or indirectly formed, connected, or coupled to the other element. However, "direct connection" or "direct coupling" indicates direct connection or coupling without an intermediate element.

The expression such as "at least one of" does not limit the order of individual elements, and for example, "at least one of X, Y, and Z" may include only X, only Y, only Z, or any combination of two or more thereof. The term "and/or" includes any combination of one or more related items.

The terms, such as "first," "second," and "third," are used to distinguish one element from another element, and the elements are not limited by these terms. The terms, such as "include," "comprise," and "have," specify the presence of a specified feature and do not exclude the presence or addition of another feature.

The terms, such as "substantially," "about," and "approximately," and similar terms are used as terms of approximation, and indicate that the range of intrinsic deviations of measured or calculated values is satisfied. For example, "about" may indicate within ±30%, ±20%, ±10%, and ±5% of a specified value.

Unless otherwise defined, all terms used in the present specification have the same meaning as commonly understood by one of ordinary skill in the art, and are not to be interpreted as an idealized or overly formal meaning unless explicitly defined herein.

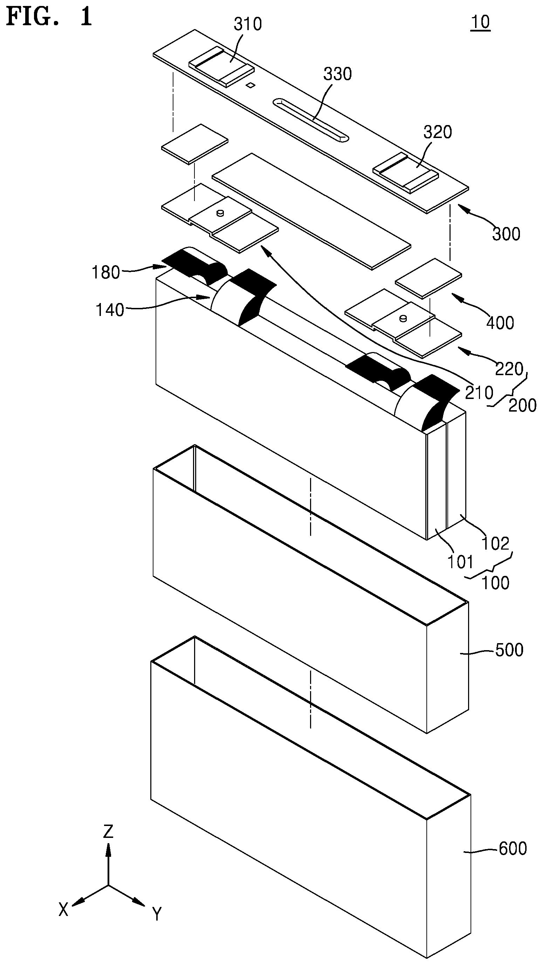

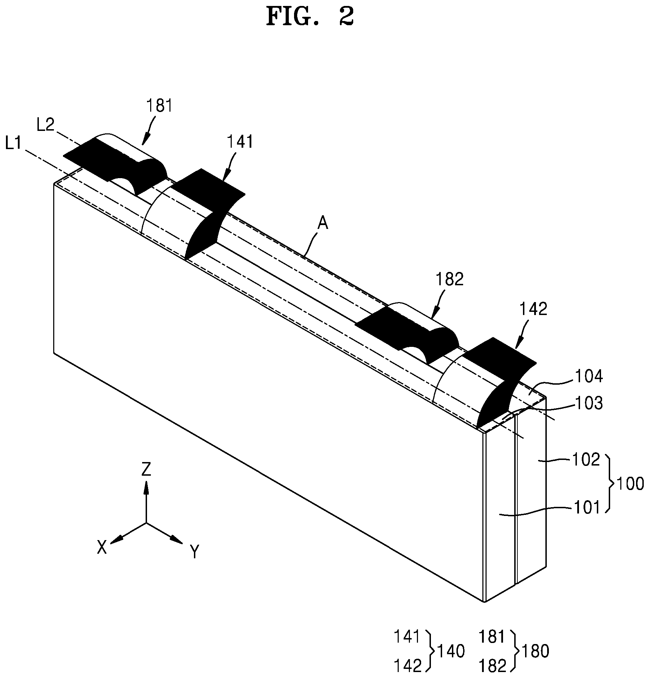

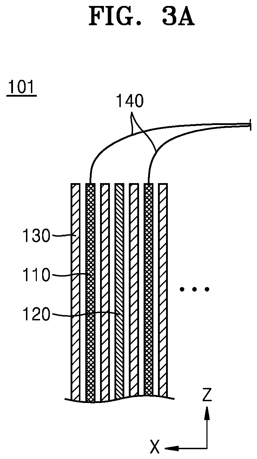

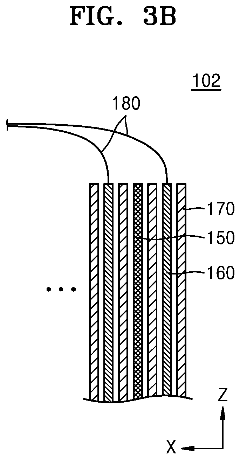

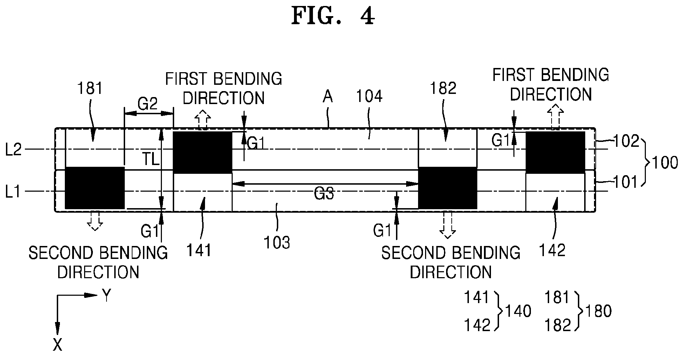

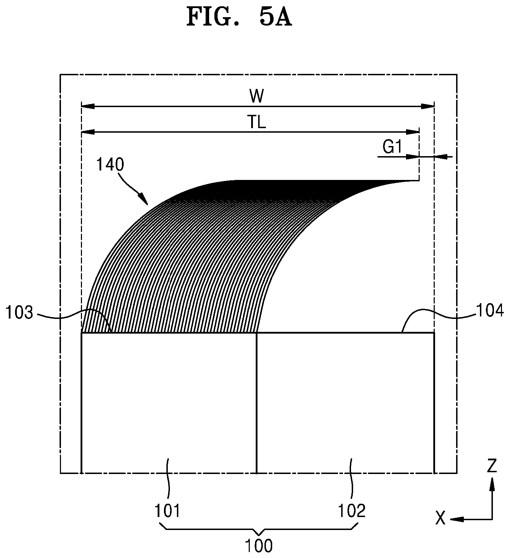

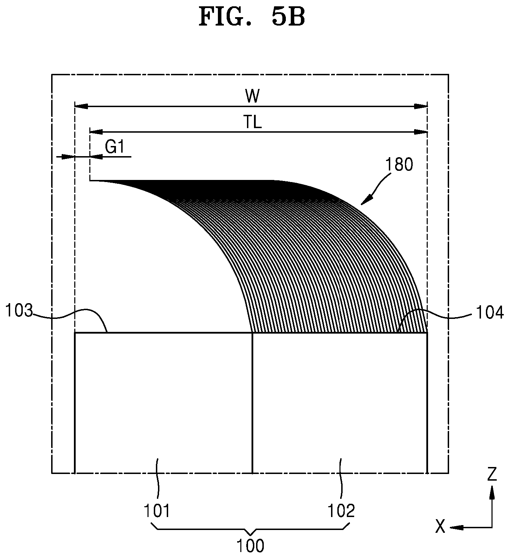

FIG. 1 is an exploded perspective view of a secondary battery 10 according to an embodiment, FIG. 2 is a perspective view of an electrode assembly 100 according to an embodiment, FIGS. 3A and 3B are cross-sectional views of the electrode assembly 100 according to embodiments, FIG. 4 is a plan view of the electrode assembly 100 according to an embodiment, and FIGS. 5A and 5B are side views of the electrode assembly 100 according to embodiments.

Unless particularly limited in the present specification, a first direction, a second direction, and a third direction may correspond to an X-axis direction, a Y-axis direction, and a Z-axis direction in drawings, respectively. Unless particularly limited in the present specification, the first direction, the second direction, and the third direction may correspond to a width direction, a length direction, and a height direction of the electrode assembly 100, respectively.

The secondary battery 10 according to an embodiment is a prismatic battery, and may include a lithium ion battery, a lithium polymer battery, a lithium metal battery, an all-solid-state battery, or a nickel battery.

The secondary battery 10 according to an embodiment may include the electrode assembly 100, a connector 200, and a cap plate 300.

The electrode assembly 100 may include an electrode plate and a separator, which are stacked or wound, and may be a structure in which insertion and de-insertion of ions and a corresponding oxidation-reduction reaction of electrons occur.

The electrode assembly 100 may include at least one electrode assembly 100. For example, as shown in FIG. 1, the electrode assembly 100 may include a first electrode assembly 101 and a second electrode assembly 102. The first electrode assembly 101 and the second electrode assembly 102 may be arranged side by side in a first direction (e.g., an X-axis direction of FIG. 1) and may be adjacent to each other. The first electrode assembly 101 and the second electrode assembly 102 may be accommodated together in a can 600. An outer surface of each electrode assembly 100 may be covered with an insulating member, a separator, or the like.

The first electrode assembly 101 may include a first electrode plate 110, a second electrode plate 120, a separator 130, and a first tab 140.

The first electrode plate 110 may include a current collector and an active material coated on the current collector, and may include a plurality of first electrode plates 110. For example, the first electrode plate 110 may be a positive electrode plate or a negative electrode plate, and may include, as the current collector, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and an alloy thereof. When the first electrode plate 110 is a positive electrode plate, the first electrode plate 110 may include, as a positive electrode active material, a lithium transition metal oxide, such as lithium cobalt oxide (LCO), lithium nickel oxide, lithium nickel cobalt oxide, lithium nickel cobalt aluminum oxide (NCA), lithium nickel cobalt manganate (NCM), lithium manganate, or lithium iron phosphate, nickel sulfide, copper sulfide, lithium sulfide, iron oxide, or vanadium oxide. The positive electrode active material may include a coating layer on the surface. For example, the coating layer may include a coating element compound, such as an oxide of a coating element, a hydroxide of a coating element, an oxyhydroxide of a coating element, an oxycarbonate of a coating element, or a hydroxycarbonate of a coating element. The coating element included in the coating layer may include magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), bismuth (Bi), arsenic (As), zirconium (Zr), or a mixture thereof.

When the first electrode plate 110 is a negative electrode plate, the first electrode plate 110 may include, as a negative electrode active material, at least one selected from a carbon-based negative electrode active material and a metal or metalloid negative electrode active material. The carbon-based negative electrode active material may include, as amorphous carbon, at least one of carbon black (CB), acetylene black (AB), furnace black (FB), ketjen black (KB), and graphene. The metal or metalloid negative electrode active material may include at least one selected from gold (Au), platinum (Pt), palladium (Pd), silicon (Si), silver (Ag), aluminum (Al), bismuth (Bi), tin (Sn), and zinc (Zn).

The second electrode plate 120 may include a current collector and an active material coated on the current collector, and may include a plurality of second electrode plates 120. The second electrode plate 120 may include a positive electrode plate or a negative electrode plate, and may have a polarity opposite to that of the first electrode plate 110. The second electrode plate 120 may include, as the current collector and the active material, the materials described with reference to the first electrode plate 110.

The separator 130 may be between the first electrode plate 110 and the second electrode plate 120, and may allow lithium ions to pass therethrough while preventing direct contact between the first electrode plate 110 and the second electrode plate 120. The separator 130 may include the plurality of separators 130. The plurality of first electrode plates 110, the plurality of second electrode plates 120, and the plurality of separators 130 may be alternately stacked or wound to form the electrode assembly 100. For example, the plurality of first electrode plates 110, the plurality of second electrode plates 120, and the plurality of separators 130 may be stacked in the first direction (or the X-axis direction of FIGS. 3A and 3B or the width direction of the electrode assembly 100). The plurality of separators 130 may be between the first electrode plates 110 and the second electrode plates 120.

The first tab 140 may extend from the first electrode plate 110 and may be a portion of a non-coating region of the first electrode plate 110, to which an active material is not applied. The first tab 140 may be connected to the cap plate 300 through a first connector 210 or a second connector 220. For example, the first connector 210 or the second connector 220 may be welded to an upper portion (e.g., an upper surface) of the first tab 140 that is in a bent state. The welded first connector 210 or second connector 220 may be connected to a first terminal 310 or second terminal 320 of the cap plate 300, and thus, the first tab 140 may be electrically connected to the cap plate 300. As shown in FIG. 3A, the first tab 140 may extend from a first end (e.g., an upper end) of the first electrode plate 110. Alternatively, the first tab 140 may extend from a second end (e.g., a lower end) of the first electrode plate 110.

The first tab 140 may include a first positive electrode tab 141 and a first negative electrode tab 142.

The first positive electrode tab 141 may extend from a positive electrode plate. For example, when the first electrode plate 110 is a positive electrode plate, the first positive electrode tab 141 may extend from the first end of the first electrode plate 110. Alternatively, when the second electrode plate 120 is a positive electrode plate, the first positive electrode tab 141 may extend from a first end of the second electrode plate 120. Each of the first positive electrode tabs 141 extending from a plurality of positive electrode plates may be grouped into one group, and may be bent in a first bending direction as shown in FIG. 4. The first positive electrode tab 141 may be welded to the first connector 210.

The first negative electrode tab 142 may extend from a negative electrode plate. For example, when the first electrode plate 110 is a negative electrode plate, the first negative electrode tab 142 may extend from the first end of the first electrode plate 110. Alternatively, when the second electrode plate 120 is a negative electrode plate, the first negative electrode tab 142 may extend from the first end of the second electrode plate 120. Each of the first negative electrode tabs 142 extending from a plurality of negative electrode plates may be grouped into one group, and may be bent in the first bending direction as shown in FIG. 4. The first negative electrode tab 142 may be welded to the second connector 220.

The first tabs 140 may extend in the same direction. For example, as shown in FIGS. 2 and 4, the first positive electrode tab 141 and the first negative electrode tab 142 may extend to the upper portion of the electrode assembly 100. The first positive electrode tab 141 and the first negative electrode tab 142 may extend to an upper surface 103 of the first electrode assembly 101. Because the first positive electrode tab 141 and the first negative electrode tab 142 extend in the same direction, efficiencies of tab alignment and bonding process may be improved, and the secondary battery 10 may be easily designed as a module or a pack. In addition, because a current flows in the same direction in both a positive electrode and a negative electrode in the electrode assembly 100, a movement path of electrons is shortened, and thus, an electrical resistance loss may be reduced, and the size of the electrode assembly 100 (the size in a direction in which a tab extends) is reduced, and thus, an internal structure of the secondary battery 10 may be implemented in a compact manner. A structure of the cap plate 300 connected to the first positive electrode tab 141 and the first negative electrode tab 142 may be simplified.

The first tabs 140 may be bent in the same direction. For example, as shown in FIGS. 2 and 4, the first positive electrode tab 141 and the first negative electrode tab 142 may be bent towards the second electrode assembly 102. The first positive electrode tab 141 and the first negative electrode tab 142 may be bent in the first bending direction, and the first bending direction may be parallel to the width direction of the electrode assembly 100 (or the first direction or the X-axis direction of FIG. 4). Alternatively, the first bending direction may be inclined by a certain angle with respect to the first direction. The first positive electrode tab 141 and the first negative electrode tab 142 may be bent in a different direction (e.g., an opposite direction) from a second positive electrode tab 181 and a second negative electrode tab 182.

An end of the first tab 140 may not extend beyond the electrode assembly 100. For example, as shown in FIGS. 4 and 5A, while the first tab 140 is bent, the end of the first tab 140 may be spaced inward by an interval G1 from an outer edge of the electrode assembly 100 (e.g., the second electrode assembly 102) in a bending direction. Alternatively, while the first tab 140 is bent, the end of the first tab 140 may be on the outer edge of the electrode assembly 100 (e.g., the second electrode assembly 102). In other words, the end of the first tab 140 may be arranged on the same line as the outer edge of the electrode assembly 100 (e.g., the second electrode assembly 102). The end of the first tab 140 may not protrude to the outside of an upper surface 104 of the second electrode assembly 102. Accordingly, it is not necessary to roll up the first tab 140, which protrudes to the outside of the electrode assembly 100, above the connector 200 or to cut the protruding first tab 140 as in the related art, and thus, manufacturing processes of the secondary battery 10 may be simplified and productivity may be increased. The first tab 140 may not contact the cap plate 300 or the can 600. In addition, when the first tab 140 is bent, it is not necessary to press the first tab 140 in a direction opposite to the bending direction so as to prevent the first tab 140 from protruding to the outside of the electrode assembly 100 or to reduce a portion of the first tab 140 protruding to the outside. It is not necessary to forcibly deform a shape of the first tab 140. In addition, when the first tab 140 is bent, it is not necessary for two jigs to bend the first tab 140 in different directions, and thus, a bending process may be performed with only one jig.

In an embodiment, an end of each of the first tab 140 and second tab 180 may not protrude to the outside of the electrode assembly 100 with respect to the first direction. Here, the first direction may be a direction parallel to the width direction of the electrode assembly 100.

The first tabs 140 may be on the same line. For example, as shown in FIGS. 2 and 4, the center of each of the first positive electrode tab 141 and the first negative electrode tab 142 may be on a first imaginary line L1. The center of each of the first positive electrode tab 141 and the first negative electrode tab 142 may refer to the center before the first tab 140 is bent. For example, the center may refer to the center in the X-axis direction before the first tab 140 is bent.

The first imaginary line L1 may extend in parallel with the length direction of the electrode assembly 100 (or the second direction or the Y-axis direction of FIG. 4). In addition, the first imaginary line L1 may be on the electrode assembly 100 (for example, the first electrode assembly 101). Because the first positive electrode tab 141 and the first negative electrode tab 142 are located on the same first imaginary line L1, the alignment of the first tab 140 with the first connector 210 and the second connector 220 may be facilitated, and the width of the secondary battery 10 may be reduced.

The length of the first tab 140 may be equal to or less than the width of the electrode assembly 100. For example, as shown in FIG. 5A, while the first tab 140 is bent, a length TL of the first tab 140 in the first direction may be equal to or less than a total width W of the electrode assembly 100 (the sum of the widths of the first electrode assembly 101 and second electrode assembly 102). Accordingly, the first tab 140 may be more reliably regulated so as not to extend to the outside of the electrode assembly 100. As shown in FIG. 5A, while the first tab 140 is bent, a portion of the first tab 140 may be positioned on the second electrode assembly 102.

The second electrode assembly 102 may include a first electrode plate 150, a second electrode plate 160, a separator 170, and the second tab 180.

The first electrode plate 150, the second electrode plate 160, and the separator 170 of the second electrode assembly 102 may be the same as the first electrode plate 110, the second electrode plate 120, and the separator 130 of the first electrode assembly 101, respectively, and detailed descriptions thereof will be omitted.

The second tab 180 may extend from the second electrode plate 160 and may be a portion of a non-coating region of the second electrode plate 160, to which an active material is not applied. The second tab 180 may be connected to the cap plate 300 through the first connector 210 or the second connector 220. For example, the first connector 210 or the second connector 220 may be welded to an upper portion (e.g., an upper surface) of the second tab 180 that is in a bent state. The welded first connector 210 or second connector 220 may be connected to the first terminal 310 or second terminal 320 of the cap plate 300, and thus, the second tab 180 may be electrically connected to the cap plate 300.

As shown in FIG. 3B, the second tab 180 may extend from the first end (e.g., an upper end) of the second electrode plate 160. Alternatively, the second tab 180 may extend from a second end (e.g., a lower end) of the second electrode plate 160. Each of the second tabs 180 extending from the plurality of second electrode plates 160 may be grouped into one group and connected to the first connector 210.

The second tab 180 may include the second positive electrode tab 181 and the second negative electrode tab 182.

The second positive electrode tab 181 may extend from a positive electrode plate. For example, when the first electrode plate 150 is a positive electrode plate, the second positive electrode tab 181 may extend from the first end of the first electrode plate 150. Alternatively, when the second electrode plate 160 is a positive electrode plate, the second positive electrode tab 181 may extend from the first end of the second electrode plate 160. Each of the second positive electrode tabs 181 extending from a plurality of positive electrode plates may be grouped into one group, and may be bent in a second bending direction as shown in FIG. 4. The second positive electrode tab 181 may be welded to the first connector 210.

The second negative electrode tab 182 may extend from a negative electrode plate. For example, when the first electrode plate 150 is a negative electrode plate, the second negative electrode tab 182 may extend from the first end of the first electrode plate 150. Alternatively, when the second electrode plate 160 is a negative electrode plate, the second negative electrode tab 182 may extend from the first end of the second electrode plate 160. Each of the second negative electrode tabs 182 extending from a plurality of negative electrode plates may be grouped into one group, and may be bent in the second bending direction as shown in FIG. 4. The second negative electrode tab 182 may be welded to the second connector 220.

The second tab 180 may extend in the same direction as the electrode assembly 100. For example, as shown in FIGS. 2 and 4, the second positive electrode tab 181 and the second negative electrode tab 182 may extend to the upper portion of the electrode assembly 100. The second positive electrode tab 181 and the second negative electrode tab 182 may extend to the upper surface 104 of the second electrode assembly 102. Because the second positive electrode tab 181 and the second negative electrode tab 182 extend in the same direction, efficiencies of tab alignment and bonding process may be improved, and the secondary battery 10 may be easily designed as a module or a pack. In addition, because a current flows in the same direction in both a positive electrode and a negative electrode in the electrode assembly 100, a movement path of electrons is shortened, and thus, an electrical resistance loss may be reduced, and the size of the electrode assembly 100 (the size in a direction in which a tab extends) is reduced, and thus, an internal structure of the secondary battery 10 may be implemented in a compact manner. A structure of the cap plate 300 connected to the second positive electrode tab 181 and the second negative electrode tab 182 may be simplified.

For example, in the secondary battery 10 according to an embodiment, the first tab 140 and the second tab 180 are extended in the same direction, and thus, the lengths of the first tab 140 and second tab 180 may be reduced by about 20% to about 30% compared to the related art. Accordingly, a proportion of a region occupied by a non-coating region relative to the entire region of the electrode assembly 100 may be reduced, and thus, the capacity of the electrode assembly 100 may be increased by increasing an active material formation area on a current collector. In addition, when the first tab 140 and the second tab 180 are bent or welded, the first tab 140 and the second tab 180 may be bent in a direction different from the bending direction or may not interfere with each other. For example, the lengths of the first tab 140 and second tab 180 may be 12 mm or less. For example, the lengths of the first tab 140 and second tab 180 may be about 7 mm to about 11mm, or about 8 mm to about 9 mm.

The second tabs 180 may be bent in the same direction. For example, as shown in FIGS. 2 and 4, the second positive electrode tab 181 and the second negative electrode tab 182 may be bent towards the first electrode assembly 101. The second positive electrode tab 181 and the second negative electrode tab 182 may be bent in the second bending direction, and the second bending direction may be bent in the width direction of the electrode assembly 100 (or the first direction or the X-axis direction of FIG. 4). Alternatively, the second bending direction may be bent in parallel with the first direction or may be inclined by a certain angle with respect to the first direction. The second positive electrode tab 181 and the second negative electrode tab 182 may be bent in a different direction (e.g., an opposite direction) from the first positive electrode tab 141 and the first negative electrode tab 142.

An end of the second tab 180 may not extend beyond the electrode assembly 100. For example, as shown in FIGS. 4 and 5B, while the second tab 180 is bent, the end of the second tab 180 may be spaced inward by the interval G1 from the outer edge of the electrode assembly 100 (e.g., the first electrode assembly 101) in the bending direction. Alternatively, while the second tab 180 is bent, the end of the second tab 180 may be on the outer edge of the electrode assembly 100 (e.g., the first electrode assembly 101). In other words, the end of the second tab 180 may be arranged on the same line as the outer edge of the electrode assembly 100 (e.g., the first electrode assembly 101). The end of the second tab 180 may not protrude to the outside of the upper surfaces 103 and 104 of the electrode assembly 100. Accordingly, it is not necessary to roll up the second tab 180, which protrudes to the outside of the electrode assembly 100, above the connector 200 or to cut the protruding second tab 180 as in the related art, and thus, the manufacturing processes of the secondary battery 10 may be simplified and the productivity may be increased. The second tab 180 may not contact the cap plate 300 or the can 600. In addition, when second tab 180 is bent, it is not necessary to press the second tab 180 in a direction opposite to the bending direction so as to prevent the second tab 180 from protruding to the outside of the electrode assembly 100 or to reduce a portion of the second tab 180 protruding to the outside. It is not necessary to forcibly deform a shape of the second tab 180. Accordingly, when the second tab 180 is bent, it is not necessary for two jigs to bend the second tab 180 in different directions, and thus, a bending process may be performed with only one jig.

The second tabs 180 may be on the same line. For example, as shown in FIGS. 2 and 4, the center of each of the second positive electrode tab 181 and the second negative electrode tab 182 may be on a second imaginary line L2. The center of each of the second positive electrode tab 181 and the second negative electrode tab 182 may refer to the center before the second tab 180 is bent. For example, the center may refer to the center in the X-axis direction before the second tab 180 is bent. The second imaginary line L2 may extend in parallel with the length direction of the electrode assembly 100 (or the second direction or the Y-axis direction of FIG. 4). In addition, the second imaginary line L2 may be on the electrode assembly 100 (for example, the second electrode assembly 102). The second imaginary line L2 may be parallel to the first imaginary line L1. Because the second positive electrode tab 181 and the second negative electrode tab 182 are located on the same second imaginary line L2, the alignment of the second tab 180 with the first connector 210 and the second connector 220 may be facilitated, and the width of the secondary battery 10 may be reduced.

The length of the second tab 180 may be equal to or less than the width of the electrode assembly 100. For example, as shown in FIG. 5B, while the second tab 180 is bent, the length TL of the second tab 180 in the first direction may be equal to or less than the total width W of the electrode assembly 100 (the sum of the widths of the first electrode assembly 101 and second electrode assembly 102). Accordingly, the second tab 180 may be more reliably regulated so as not to extend beyond the electrode assembly 100. As shown in FIG. 5B, while the second tab 180 is bent, a portion of the second tab 180 may be positioned on the first electrode assembly 101.

The first tab 140 and the second tab 180 may be bent in different directions. For example, as shown in FIG. 4, the first tab 140 may be bent in the first bending direction, and the second tab 180 may be bent in the second bending direction. The first bending direction and the second bending direction are not necessarily opposite directions, and may have certain angles such that that the first tab 140 and the second tab 180 do not contact or overlap each other. For example, an angle between the first bending direction and the second bending direction may be ±5 degrees or ±10 degrees.

The ends of the first tab 140 and second tab 180 may be positioned further than the centers of other tabs. For example, as shown in FIG. 4, the ends of the first positive electrode tab 141 and first negative electrode tab 142 may be positioned further in the first bending direction than the centers of the second positive electrode tab 181 and second negative electrode tab 182 in the bending direction. The first tab 140 and the second tab 180 may be connected to the connector 200 while the first tab 140 and the second tab 180 are bent. For example, the first connector 210 may be welded on the first positive electrode tab 141 and the second positive electrode tab 181, and the second connector 220 may be welded on the first negative electrode tab 142 and the second negative electrode tab 182. Because the first tab 140 and the second tab 180 are connected to the connector 200 while the first tab 140 and the second tab 180 are bent in opposite directions, the connector 200 may be more stably supported on the first tab 140 and the second tab 180.

The first tab 140 and the second tab 180 may be alternately arranged. The first tab 140 and the second tab 180 may be spaced apart from each other and may not face each other. The first tab 140 and the second tab 180 may not overlap each other in the first direction. For example, as shown in FIGS. 2 and 4, the second positive electrode tab 181, the first positive electrode tab 141, the first negative electrode tab 142, and the second negative electrode tab 182 may be arranged in the stated order in the second direction. The first tab 140 and the second tab 180 may at least partially overlap each other in the second direction (or the Y-axis direction of FIG. 4). Accordingly, the first tab 140 and the second tab 180 may not interfere with or overlap each other.

As shown in FIG. 4, the first positive electrode tab 141 and the second positive electrode tab 181, and the first negative electrode tab 142 and the second negative electrode tab 182 may be spaced apart from each other by an interval G2. The interval G2 may have a certain length such that the first tab 140 and the second tab 180 may stably support the connector 200 without interfering with each other. For example, the interval G2 may be about 40% to about 90% of the width of the first tab 140 or second tab 180. When the interval G2 is less than 40% of the width of the first tab 140 or second tab 180, the first tab 140 or the second tab 180 may be bent by an external force and interfere with the other. When the interval G2 exceeds 90% of the width of the first tab 140 or second tab 180, an interval between the first tab 140 and the second tab 180 may be excessively widened, making it difficult for the connector 200 to be stably supported. Alternatively, the interval G2 may be about 50% to about 80% of the width of the first tab 140 or second tab 180. An interval G3 may be an interval between the first tab 140 and the second tab 180 located inside, for example, an interval between the first positive electrode tab 141 and the second negative electrode tab 182.

Among the first tab 140 and the second tab 180, tabs having the same polarity may be bent in different directions, and tabs having different polarities may be bent in the same direction. For example, the first positive electrode tab 141 and the second positive electrode tab 181 may be bent in different directions, and the first negative electrode tab 142 and the second negative electrode tab 182 may be bent in different directions. The first positive electrode tab 141 and the first negative electrode tab 142 may be bent in the same direction, and the second positive electrode tab 181 and the second negative electrode tab 182 may be bent in the same direction.

Some of a plurality of tabs including the first tab 140 and the second tab 180 may be on the first imaginary line L1 extending in the second direction different from the first direction, and the others may be on the second imaginary line L2 spaced apart from the first imaginary line L1 in the first direction and parallel to the first imaginary line L1. Among the plurality of tabs, a bending direction of the tabs on the first imaginary line L1 may be different from a bending direction of the tabs on the second imaginary line L2. For example, as shown in FIG. 4, the first positive electrode tab 141 and the first negative electrode tab 142 may be on the first imaginary line L1, and the second positive electrode tab 181 and the second negative electrode tab 182 may be on the second imaginary line L2. The first positive electrode tab 141 and the first negative electrode tab 142 may be bent in the first bending direction, and the second positive electrode tab 181 and the second negative electrode tab 182 may be bent in a direction (e.g., the second bending direction) different from the first bending direction.

Tabs having the same polarity among the first tab 140 and the second tab 180 may be on different imaginary lines.

For example, the first positive electrode tab 141 may be on the first imaginary line L1, and the second positive electrode tab 181 may be on the second imaginary line L2. For example, the center of the first positive electrode tab 141 may be on the first imaginary line L1, and the center of the second positive electrode tab 181 may be on the second imaginary line L2. In addition, while the first positive electrode tab 141 is bent, an upper portion (e.g., an upper surface) of the first positive electrode tab 141 may be on the second imaginary line L2, and while the second positive electrode tab 181 is bent, an upper portion (e.g., an upper surface) of the second positive electrode tab 181 may be on the first imaginary line L1.

Also, the first negative electrode tab 142 may be on the first imaginary line L1, and the second negative electrode tab 182 may be on the second imaginary line L2. For example, the center of the first negative electrode tab 142 may be on the first imaginary line L1, and the center of the second negative electrode tab 182 may be on the second imaginary line L2. In addition, while the first negative electrode tab 142 is bent, an upper portion (e.g., an upper surface) of the first negative electrode tab 142 may be on the second imaginary line L2, and while the second negative electrode tab 182 is bent, an upper portion (e.g., an upper surface) of the second negative electrode tab 182 may be on the first imaginary line L1.

The first imaginary line L1 and the second imaginary line L2 may be parallel to each other and spaced apart from each other in the first direction. Accordingly, the electrode assembly 100, the connector 200, and the cap plate 300 may be easily aligned during the manufacturing processes. In addition, when the first tab 140 and the second tab 180 are welded to the connector 200, it is easy to secure a working space and reduce interference with a welding pool.

The electrode assembly 100 may include an extension region A, and the first tab 140 and the second tab 180 may not extend beyond the extension region A. For example, as shown in FIG. 4, the extension region A may be defined by outer edges of the upper surface 103 of the first electrode assembly 101 and the upper surface 104 of the second electrode assembly 102. For example, the extension region A may be located on the upper surfaces 103 and 104 of the electrode assembly 100. The first tab 140 extending from the first electrode assembly 101 may be bent toward the second electrode assembly 102, but an end thereof may not extend beyond the extension region A and may be located inside the extension region A. The second tab 180 extending from the second electrode assembly 102 may be bent toward the first electrode assembly 101, but an end thereof may not extend beyond the extension region A and may be located inside the extension region A. Accordingly, the sizes of the first tab 140 and the second tab 180 and the size of the connector 200 connected to the first tab 140 and the second tab 180 may be reduced in the first direction and the second direction.

Because the first tab 140 and the second tab 180 are positioned within a boundary of the electrode assembly 100, interference between the first tab 140 and the second tab 180 and the outside of the electrode assembly 100 may be fundamentally blocked, and a risk of short circuit and mechanical interference may be prevented. In addition, because the first tab 140 and the second tab 180 do not protrude to the outside of the boundary of the electrode assembly 100, assembly or packaging processes of the electrode assembly 100 may be facilitated, and the electrode assembly 100 may be densely arranged, thereby improving energy density of the secondary battery 10.

In an embodiment, the first positive electrode tab 141 may extend to one side surface of the electrode assembly 100, and the first negative electrode tab 142 may extend to the other side surface of the electrode assembly 100. The first positive electrode tab 141 and the first negative electrode tab 142 may be on the first imaginary line L1 extending in the second direction different from the first direction. In an embodiment, the second positive electrode tab 181 may extend to one side surface of the electrode assembly 100, and the second negative electrode tab 182 may extend to the other side surface of the electrode assembly 100. The second positive electrode tab 181 and the second negative electrode tab 182 may be on the second imaginary line L2 spaced apart from the first imaginary line L1 and parallel to the first imaginary line L1.

In an embodiment, the ends of the first positive electrode tab 141 and first negative electrode tab 142, which are bent, may be located further in the first bending direction than centers of the second positive electrode tab 181 and second negative electrode tab 182. In an embodiment, the ends of the second positive electrode tab 181 and the second negative electrode tab 182, which are bent, may be located further in the second bending direction than centers of the first positive electrode tab 141 and first negative electrode tab 142.

The connector 200 may electrically connect the electrode assembly 100 and the cap plate 300. The connector 200 may be positioned on the first tab 140 and the second tab 180 of the electrode assembly 100 and may be connected to the cap plate 300. The connector 200 may be bonded to the first tab 140 and the second tab 180 and may include a protrusion at an upper portion thereof. The protrusion may be inserted into a groove or a hole formed in a bottom surface of the cap plate 300 and may contact the first terminal 310 and the second terminal 320.

The connector 200 may include the first connector 210 and the second connector 220.

The first connector 210 may connect a positive electrode tab or a negative electrode tab to the cap plate 300. For example, the first connector 210 may be a positive electrode connector and may be located above the first positive electrode tab 141 and the second positive electrode tab 181. While the first positive electrode tab 141 and the second positive electrode tab 181 are bent, the first connector 210 may be mounted on the upper surfaces of the first positive electrode tab 141 and second positive electrode tab 181. The first connector 210 may be bonded (e.g., laser-welded) to the first positive electrode tab 141 and the second positive electrode tab 181.

The second connector 220 may connect a positive electrode tab or a negative electrode tab to the cap plate 300. For example, the second connector 220 may be a negative electrode connector and may be located above the first negative electrode tab 142 and the second negative electrode tab 182. While the first negative electrode tab 142 and the second negative electrode tab 182 are bent, the second connector 220 may be mounted on the upper surfaces of the first negative electrode tab 142 and second negative electrode tab 182. The second connector 220 may be bonded (e.g., laser-welded) to the first negative electrode tab 142 and the second negative electrode tab 182.

The cap plate 300 may be arranged on an upper portion of the secondary battery 10 and may connect the electrode assembly 100 to an external circuit. The cap plate 300 may seal an open portion of the can 600 and discharge gas abnormally generated in the electrode assembly 100 to the outside. For example, the cap plate 300 may be located above the connector 200 and may be bonded (e.g., welded or mechanically coupled) to the connector 200 to be electrically connected to the electrode assembly 100. The cap plate 300 may be bonded to an opening in the can 600 to seal the secondary battery 10. For example, the cap plate 300 may include a fuse configured to disconnect a circuit when an abnormal current flows, and a positive temperature coefficient (PTC) element configured to limit a current flow by increasing resistance when a temperature rises above a certain temperature.

The cap plate 300 may include the first terminal 310, the second terminal 320, and a vent 330.

The first terminal 310 may be located on the cap plate 300 at a location corresponding to the first connector 210. A groove or a hole into which the protrusion of the first connector 210 is inserted may be formed on the bottom surface of the cap plate 300. When the protrusion of the first connector 210 is inserted into the groove or hole of the cap plate 300 to contact the first terminal 310, the first connector 210 and the first terminal 310 may be electrically connected to each other. For example, while the cap plate 300 and the first connector 210 are aligned with each other, the first terminal 310 and the first connector 210 may be physically connected to each other by performing welding on the upper surface of the first terminal 310.

The second terminal 320 may be located on the cap plate 300 at a location corresponding to the second connector 220. A groove or a hole into which the protrusion of the second connector 220 is inserted may be formed on the bottom surface of the cap plate 300. When the protrusion of the second connector 220 is inserted into the groove or hole of the cap plate 300 to contact the second terminal 320, the second connector 220 and the second terminal 320 may be electrically connected to each other. For example, while the cap plate 300 and the second connector 220 are aligned with each other, the second terminal 320 and the second connector 220 may be physically connected to each other by performing welding on the upper surface of the second terminal 320.

The vent 330 is located between the first terminal 310 and the second terminal 320 and may include at least one hole or slit. The vent 330 may be located at the center of the cap plate 300 in the length direction to correspond to the center of the electrode assembly 100.

The secondary battery 10 according to an embodiment may further include an insulator 400, a protection member 500, and the can 600.

The insulator 400 may be between the electrode assembly 100 and the cap plate 300 and may insulate the first tab 140 and the second tab 180 of the electrode assembly 100 from the cap plate 300 and the can 600. As shown in FIG. 1, the insulator 400 may be below the cap plate 300 and may not interfere with the first tab 140 and the second tab 180. For example, the insulator 400 may include a plurality of insulators 400. Some insulators 400 may be between a connecting protrusion of the first connector 210 and a connecting protrusion of the second connector 220. The others of the insulators 400 may be located outside each of the connecting protrusion of the first connector 210 and outside the connecting protrusion of the second connector 220. The plurality of insulators 400 may support protruding portions of the first connector 210 and second connector 220 to align the first tab 140 and the second tab 180, and prevent the first tab 140 and the second tab 180 from shaking. For example, the insulator 400 may include at least one hole at a location corresponding to the vent 330 of the cap plate 300, and may allow gas generated in the electrode assembly 100 to escape to the vent 330. The insulator 400 may include a material having excellent heat resistance and insulation properties, such as polyamide, polyester, polyphenylene sulfide, and ceramic-coated plastic.

The protection member 500 may surround the electrode assembly 100 such that the can 600 and the electrode assembly 100 are not in direct contact with each other. As shown in FIG. 1, the electrode assembly 100 may be accommodated in the can 600 while the protection member 500 is attached to or in contact with an outer surface of the electrode assembly 100. The protection member 500 may include a member capable of securing a gap between the electrode assembly 100 and the can 600 and preventing contact between the electrode assembly 100 and the can 600, such as a tape, a film, a pad, a spacer, or a frame. The protection member 500 may insulate the electrode assembly 100 from the can 600, may prevent the electrode assembly 100 from being shaken by a gap while the electrode assembly 100 is inserted into the can 600, and may protect the electrode assembly 100 during assembly processes. For example, the protection member 500 may be positioned on surfaces of the electrode assembly 100 other than the upper surface of the electrode assembly 100. For example, the protection member 500 may be attached to the outer surface of the electrode assembly 100, or may include an inner space accommodating the electrode assembly 100 and have an open top. The protection member 500 may include an insulating material such as polyimide, polyurethane, or silicone.

The can 600 may accommodate the electrode assembly 100 therein and may be sealed by the cap plate 300. As shown in FIG. 1, the can 600 includes an inner space and may have an open top. The can 600 may have a shape and size corresponding to the electrode assembly 100. After the electrode assembly 100 is accommodated in the inner space of the can 600, the cap plate 300 may be mounted on an upper portion of the can 600. Also, the cap plate 300 and the can 600 may be bonded (e.g., welded, adhered, or bolted) along an edge of the cap plate 300 to seal the upper portion of the can 600. The can 600 may include a metal (e.g., aluminum or stainless steel).

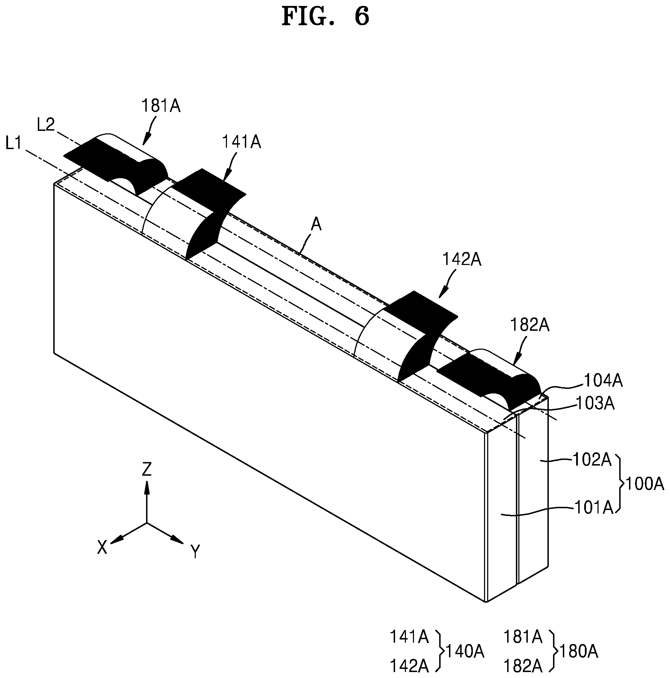

FIG. 6 is a perspective view of an electrode assembly 100A according to another embodiment.

When compared to the electrode assembly 100 described above, the electrode assembly 100A has a different arrangement of a first tab 140A and a second tab 180A, and the remaining configurations may be the same. The electrode assembly 100A may include a first electrode assembly 101A and a second electrode assembly 102A, the first electrode assembly 101A may include the first tab 140A, and the second electrode assembly 102A may include the second tab 180A. The first tab 140A may include a first positive electrode tab 141A and a first negative electrode tab 142A, and the second tab 180A may include a second positive electrode tab 181A and a second negative electrode tab 182A.

The first positive electrode tab 141A and the first negative electrode tab 142A may extend to an upper surface 103A of the first electrode assembly 101A, and the second positive electrode tab 181A and the second negative electrode tab 182A may extend to an upper surface 104A of the second electrode assembly 102A. The first tab 140A and the second tab 180A may be bent in opposite directions. The first tab 140A and the second tab 180A may be located inside the extension region A defined on the upper surfaces 103A and 104A. The first tab 140A may be on the first imaginary line L1, and the second tab 180A may be on the second imaginary line L2.

The first tab 140A may be positioned between the second tabs 180A. For example, as shown in FIG. 6, the second positive electrode tab 181A, the first positive electrode tab 141A, the first negative electrode tab 142A, and the second negative electrode tab 182A may be arranged in the stated order in a length direction of the electrode assembly 100A (or the second direction or the Y-axis direction of FIG. 6). Alternatively, the second tab 180A may be located inside the first tab 140A. For example, the first positive electrode tab 141A, the second positive electrode tab 181A, the second negative electrode tab 182A, the first negative electrode tab 142A may be arranged in the stated order, or the first positive electrode tab 141A, the second positive electrode tab 181A, the first negative electrode tab 142A, and the second negative electrode tab 182A may be arranged in the stated order. An arrangement of tabs may be adjusted according to the capacity, size, and shape of the electrode assembly 100A or the shape or size of an application to which the electrode assembly 100A is applied.

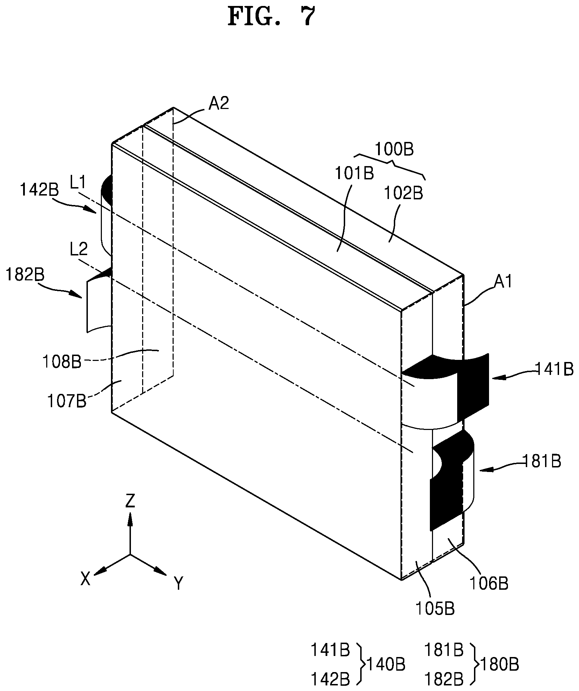

FIG. 7 is a perspective view of an electrode assembly 100B according to another embodiment.

When compared to the electrode assembly 100 described above, the electrode assembly 100B has different configurations of a first tab 140B and a second tab 180B, and the remaining configurations may be the same.

The electrode assembly 100B may include a first electrode assembly 101B and a second electrode assembly 102B, the first electrode assembly 101B may include the first tab 140B, and the second electrode assembly 102B may include the second tab 180B. The first tab 140B may include a first positive electrode tab 141B and a first negative electrode tab 142B, and the second tab 180B may include a second positive electrode tab 181B and a second negative electrode tab 182B.

The first tab 140B and the second tab 180B may extend to a side surface of the electrode assembly 100B. The first positive electrode tab 141B and the first negative electrode tab 142B may extend in different directions, and the second positive electrode tab 181B and the second negative electrode tab 182B may extend in different directions. For example, as shown in FIG. 7, the first tab 140B may extend to opposite side surfaces 105B and 107B of the first electrode assembly 101B. The first positive electrode tab 141B may extend to the side surface 105B, and the first negative electrode tab 142B may extend to the side surface 107B. The second tab 180B may extend to opposite side surfaces 106B and 108B of the second electrode assembly 102B. The second positive electrode tab 181B may extend to the side surface 106B, and the second negative electrode tab 182B may extend to the side surface 108B.

The first positive electrode tab 141B and the first negative electrode tab 142B may be on the first imaginary line L1, and the second positive electrode tab 181B and the second negative electrode tab 182B may be on the second imaginary line L2. As shown in FIG. 7, the first imaginary line L1 and the second imaginary line L2 may be spaced apart from each other in the first direction and/or the second direction. The first positive electrode tab 141B and the first negative electrode tab 142B may be arranged above the second positive electrode tab 181B and the second negative electrode tab 182B. Alternatively, the first positive electrode tab 141B and the first negative electrode tab 142B may be arranged below the second positive electrode tab 181B and the second negative electrode tab 182B. A direction in which a tab extends may be adjusted according to the capacity, size, and shape of the electrode assembly 100B or the shape or size of an application to which the electrode assembly 100B is applied. Because tabs are divided to opposite sides and extended in different direction, the number of tabs concentrated to one side may be reduced and a current density load per tab may be lowered. In addition, heat generation of the electrode assembly 100B may be distributed in different directions such that heat generation distribution becomes uniform.

While the first positive electrode tab 141B is bent, in the first bending direction, an end of the first positive electrode tab 141B may be located further than a center of the second positive electrode tab 181B. While the second positive electrode tab 181B is bent, in the first bending direction, an end of the second positive electrode tab 181B may be located further than a center of the first positive electrode tab 141B.

The first tab 140B and the second tab 180B may be spaced apart from each other in a height direction of the electrode assembly 100B (or the third direction or the Z-axis direction of FIG. 7). The first tab 140B and the second tab 180B may at least partially overlap each other in the height direction.

FIG. 7 illustrates a case in which tabs extend to opposite side surfaces of the electrode assembly 100B, but the tabs may extend to each of an upper surface and lower surface of the electrode assembly 100B.

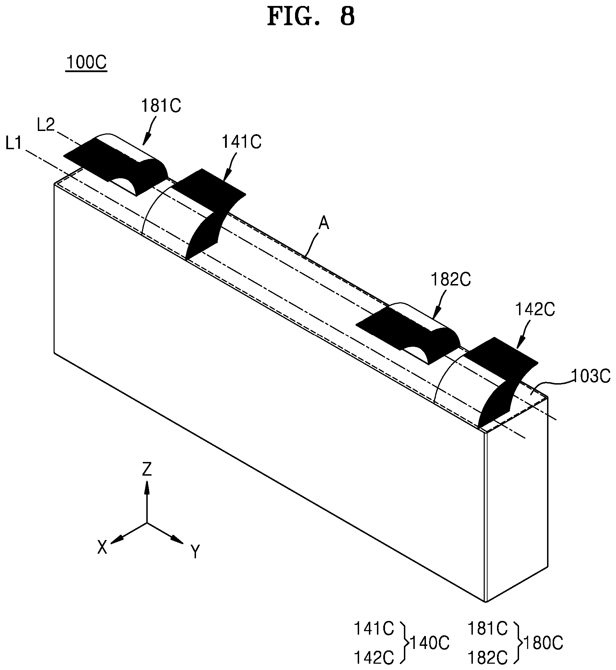

FIG. 8 is a perspective view of an electrode assembly 100C according to another embodiment.

When compared to the electrode assembly 100 described above, the electrode assembly 100C may include one electrode assembly 100C and have different configurations of a first tab 140C and a second tab 180C, and the remaining configurations may be the same.

The electrode assembly 100C may include the first tab 140C and the second tab 180C, the first tab 140C may include a first positive electrode tab 141C and a first negative electrode tab 142C, and the second tab 180C may include a second positive electrode tab 181C and a second negative electrode tab 182C.

The first positive electrode tab 141C may be a group of tabs extending from some (e.g., half) of positive electrode plates included in the electrode assembly 100C, and the second positive electrode tab 181C may be a group of tabs extending from the remaining positive electrode plates. The first negative electrode tab 142C may be a group of tabs extending from some (e.g., half) of negative electrode plates included in the electrode assembly 100C, and the second negative electrode tab 182C may be a group of tabs extending from the remaining negative electrode plates.

The first tab 140C and the second tab 180C may extend to an upper surface 103C of the electrode assembly 100C. The first tab 140C may be bent in the first bending direction (e.g., a direction toward one long side of the upper surface 103C of the electrode assembly 100C), and the second tab 180C may be bent in the second bending direction (e.g., a direction toward the opposite long side of the upper surface 103C of the electrode assembly 100C).

The first positive electrode tab 141C and the first negative electrode tab 142C may be on the first imaginary line L1, and the second positive electrode tab 181C and the second negative electrode tab 182C may be on the second imaginary line L2. For example, as shown in FIG. 8, the second positive electrode tab 181C, the first positive electrode tab 141C, the first negative electrode tab 142C, and the second negative electrode tab 182C may be arranged in the stated order in a length direction of the electrode assembly 100C (or the second direction or the Y-axis direction of FIG. 8).

Even when one electrode assembly 100C is included, the first tab 140C and the second tab 180C may be controlled not to protrude to the outside of the electrode assembly 100C.

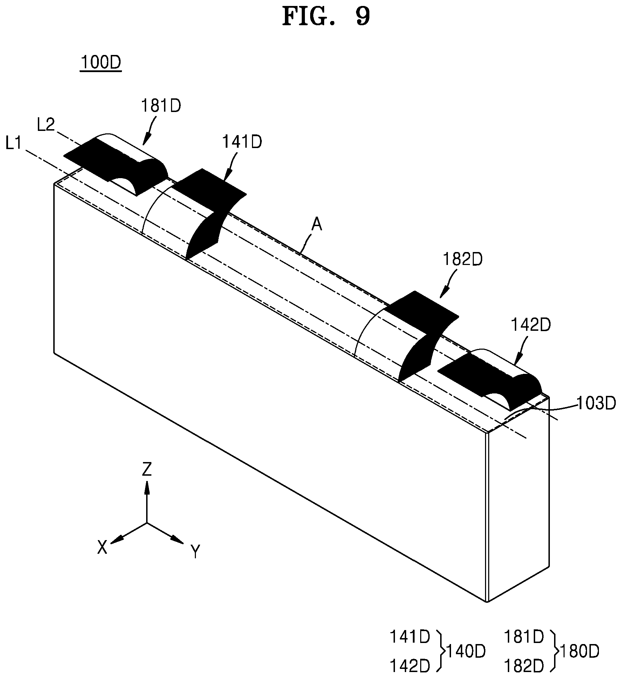

FIG. 9 is a perspective view of an electrode assembly 100D according to another embodiment.

When compared to the electrode assembly 100C described above, the electrode assembly 100D may include one electrode assembly 100D and have a different arrangement of a first tab 140D and a second tab 180D, and the remaining configurations may be the same.

As shown in FIG. 9, the first tab 140D may be positioned between the second tabs 180D. A second positive electrode tab 181D and a second negative electrode tab 182D may be located outside in a length direction of the electrode assembly 100D, and a first positive electrode tab 141D and a first negative electrode tab 142D may be located inside in the length direction of the electrode assembly 100D. Alternatively, the second tab 180D may be located inside the first tab 140D. For example, the first positive electrode tab 141D, the second positive electrode tab 181D, the second negative electrode tab 182D, the first negative electrode tab 142D may be arranged in the stated order, or the first positive electrode tab 141D, the second positive electrode tab 181D, the first negative electrode tab 142D, and the second negative electrode tab 182D may be arranged in the stated order. An arrangement of tabs may be adjusted according to the capacity, size, and shape of the electrode assembly 100D or the shape or size of an application to which the electrode assembly 100D is applied.

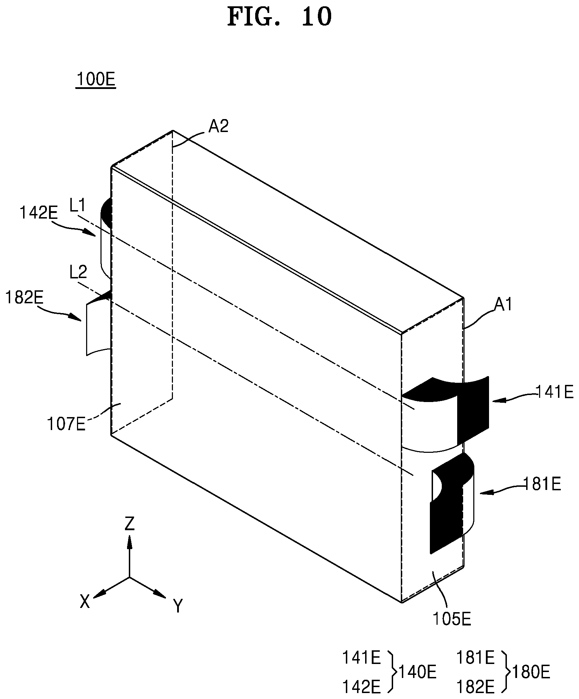

FIG. 10 is a perspective view of an electrode assembly 100E according to another embodiment.

When compared to the electrode assembly 100C described above, the electrode assembly 100E may include one electrode assembly 100E and have different configurations of a first tab 140E and a second tab 180E, and the remaining configurations may be the same.

The electrode assembly 100E may include the first tab 140E and the second tab 180E, the first tab 140E may include a first positive electrode tab 141E and a first negative electrode tab 142E, and the second tab 180E may include a second positive electrode tab 181E and a second negative electrode tab 182E.

The first tab 140E and the second tab 180E may extend to a side surface of the electrode assembly 100E. The first positive electrode tab 141E and the first negative electrode tab 142E may extend in different directions, and the second positive electrode tab 181E and the second negative electrode tab 182E may extend in different directions. For example, as shown in FIG. 10, the first tab 140E and the second tab 180E may extend to opposite side surfaces 105E and 107E of the electrode assembly 100E. The first positive electrode tab 141E and the second positive electrode tab 181E may extend to the side surface 105E, and the first negative electrode tab 142E and the second negative electrode tab 182E may extend to the side surface 107E. An outer edge of the side surface 105E of the electrode assembly 100E may define a first extension region A1, and the first positive electrode tab 141E and the second positive electrode tab 181E may not protrude to the outside of the first extension region A1. An outer edge of the side surface 107E of the electrode assembly 100E may define a second extension region A2, and the first negative electrode tab 142E and the second negative electrode tab 182E may not protrude to the outside of the second extension region A2.

The first positive electrode tab 141E and the first negative electrode tab 142E may be on the first imaginary line L1, and the second positive electrode tab 181E and the second negative electrode tab 182E may be on the second imaginary line L2. As shown in FIG. 10, the first imaginary line L1 and the second imaginary line L2 may be spaced apart from each other in the first direction and/or the second direction. The first positive electrode tab 141E and the first negative electrode tab 142E may be arranged above the second positive electrode tab 181E and the second negative electrode tab 182E. Alternatively, the first positive electrode tab 141E and the first negative electrode tab 142E may be arranged below the second positive electrode tab 181E and the second negative electrode tab 182E. A direction in which a tab extends may be adjusted according to the capacity, size, and shape of the electrode assembly 100E or the shape or size of an application to which the electrode assembly 100E is applied. Because tabs are divided to opposite sides and extended in different direction, the number of tabs concentrated to one side may be reduced and a current density load per tab may be lowered. In addition, heat generation of the electrode assembly 100E may be distributed in different directions such that heat generation distribution becomes uniform.

While the first positive electrode tab 141E is bent, in the first bending direction, an end of the first positive electrode tab 141E may be located further than a center of the second positive electrode tab 181E. While the second positive electrode tab 181E is bent, in the first bending direction, an end of the second positive electrode tab 181E may be located further than a center of the first positive electrode tab 141E.

The first tab 140E and the second tab 180E may be spaced apart from each other in a height direction of the electrode assembly 100E (or the third direction or the Z-axis direction of FIG. 10). The first tab 140E and the second tab 180E may at least partially overlap each other in the height direction.

FIG. 10 illustrates a case in which tabs extend to opposite side surfaces of the electrode assembly 100E, but the tabs may extend to each of an upper surface and lower surface of the electrode assembly 100E.

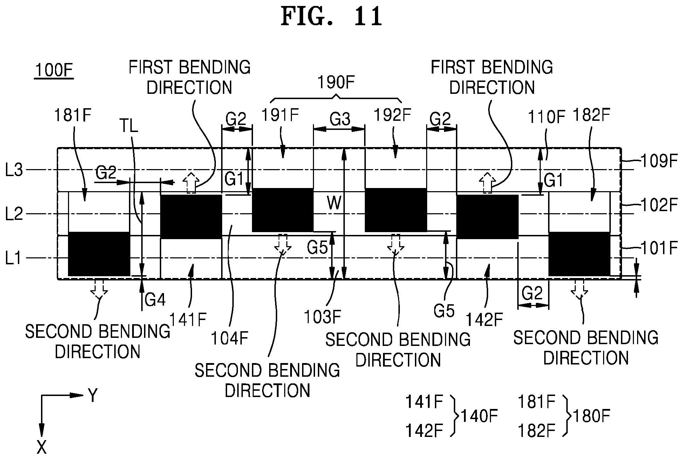

FIG. 11 is a plan view of an electrode assembly 100F according to another embodiment.

When compared to the electrode assembly 100 described above, the electrode assembly 100F may further include a third electrode assembly 109F, and the remaining components may be the same.

The electrode assembly 100F may include a first electrode assembly 101F, a second electrode assembly 102F, and the third electrode assembly 109F. The first electrode assembly 101F, the second electrode assembly 102F, and the third electrode assembly 109F may be arranged in the stated order in the first direction. Alternatively, the second electrode assembly 102F and the third electrode assembly 109F may face each other with the first electrode assembly 101F therebetween.

The third electrode assembly 109F may include a third tab 190F. First, second, and third tabs 140F, 180F, and 190F included in the first, second, and third electrode assemblies 101F, 102F, and 109F may be bent in a set direction. For example, as shown in FIG. 11, the first tab 140F may be bent in the first bending direction, the second tab 180F may be bent in the second bending direction, and the third tab 190F may extend to an upper surface 110F of the third electrode assembly 109F and may be bent in the second bending direction. Alternatively, the third tab 190F may be bent in a third bending direction having a certain angle with respect to the second bending direction. The third tab 190F may be spaced apart from the first tab 140F and the second tab 180F.

An outer edge of the upper surface 110F of the third electrode assembly 109F may define the extension region A together with an outer edge of an upper surface 103F of the first electrode assembly 101F and an outer edge of an upper surface 104F of the second electrode assembly 102F. The first tab 140F, the second tab 180F, and the third tab 190F may not protrude to the outside of the extension region A. The third tab 190F may be positioned between the first tabs 140F.

The third tab 190F may include a third positive electrode tab 191F and a third negative electrode tab 192F.

The third positive electrode tab 191F may be bent toward the first electrode assembly 101F or the second electrode assembly 102F. An end of the third positive electrode tab 191F may be spaced apart, by the interval G1, from a facing edge of the first electrode assembly 101F (e.g., one long side of the first electrode assembly 101F). The third positive electrode tab 191F may be spaced apart from a first positive electrode tab 141F by an interval G2 in the second direction.

The third negative electrode tab 192F may be bent toward the first electrode assembly 101F or the second electrode assembly 102F. An end of the third negative electrode tab 192F may be spaced apart, by the interval G1, from a facing edge of the first electrode assembly 101F (e.g., one long side of the first electrode assembly 101F). The third negative electrode tab 192F may be spaced apart from a first negative electrode tab 142F by the interval G2 in the second direction. An end of the second tab 180F may be spaced apart, by an interval G4, from a facing edge of the first electrode assembly 101F (e.g., one long side of the first electrode assembly 101F). The interval G3 is an interval between the third tabs 190F located inside, and may be, for example, an interval between the third positive electrode tab 191F and the third negative electrode tab 192F. An end of the third tab 190F may be spaced apart, by an interval G5, from a facing edge of the first electrode assembly 101F (e.g., one long side of the first electrode assembly 101F).

The third tab 190F may be on a third imaginary line L3. As shown in FIG. 11, the third imaginary line L3 may be an imaginary line extending in parallel with the second direction, and may be parallel with the first imaginary line L1 and the second imaginary line L2. The third imaginary line L3 may be spaced apart from the second imaginary line L2 in the first direction.

Because the electrode assembly 100F includes the third electrode assembly 109F, the capacity of the electrode assembly 100F may be increased. In addition, because the area of the extension region A of the electrode assembly 100F, from which a tab extends, is increased, the connector 200 and the cap plate 300 may be stably supported on the tab.

Alternatively, the electrode assembly 100F may include four or more electrode assemblies. Even in this case, a tab included in each electrode assembly may not protrude to the outside of the electrode assembly while the tab is bent.

The secondary battery 10 according to an embodiment may include at least one electrode assembly, and the electrode assembly may include a plurality of tabs. In this case, the tabs arranged closest to opposite side surfaces may be bent in different directions.

For example, as shown in FIG. 2, a direction in which the first positive electrode tab 141 and the first negative electrode tab 142, which are closest to one side surface of the electrode assembly 100, are bent may be different from a direction in which the second positive electrode tab 181 and the second negative electrode tab 182, which are closest to the other side surface of the electrode assembly 100, are bent. For example, the directions in which the plurality of tabs are bent may be opposite directions.

In addition, as shown in FIG. 11, when the electrode assembly 100 is provided as a plurality of electrode assemblies (e.g., three (the first, second, and third electrode assemblies 101F, 102F, and 109F)), bending directions of tabs (the first positive electrode tab 141F, the first negative electrode tab 142F, the third positive electrode tab 191F, and the third negative electrode tab 192F) included in two electrode assemblies (the first electrode assembly 101F and the third electrode assembly 109F) arranged on the outermost side may be different from each other. For example, a direction in which the first positive electrode tab 141F and the first negative electrode tab 142F, which are closest to one side surface (a lower surface in FIG. 11) of the electrode assembly 100, are bent may be different from a direction in which the third positive electrode tab 191F and the third negative electrode tab 192F, which are closest to the other side surface (an upper surface in FIG. 11) of the electrode assembly 100, are bent. For example, the bending directions of the plurality of tabs may be opposite to each other.

In addition, when the electrode assembly 100 is provided as a plurality of electrode assemblies, a tab of an electrode assembly between two electrode assemblies arranged at the outermost side may be bent in any direction within a range not in contact with an adjacent tab. For example, although FIG. 11 illustrates that a second positive electrode tab 181F and a second negative electrode tab 182F included in the second electrode assembly 102F between the first electrode assembly 101F and the third electrode assembly 109F are bent in the second bending direction, the first electrode assembly 101F and the third electrode assembly 109F may be bent in the first bending direction or may be bent in different directions. In addition, the second positive electrode tab 181F and the second negative electrode tab 182F may be bent in different directions from the adjacent first and third positive electrode tabs 141F and 191F and the adjacent first and third negative electrode tabs 142F and 192F within a range not in contact with the same, respectively.

Ends of a plurality of tabs included in an electrode assembly of the secondary battery 10 according to an embodiment may not protrude to the outside of at least one electrode assembly in the first direction parallel to a width direction of the at least one electrode assembly.

Among the plurality of tabs, tabs having the same polarity may be bent in different directions, and tabs having different polarities may be bent in the same direction.

The plurality of tabs may extend in the same direction from a plurality of electrode plates, or some of the plurality of tabs may extend in one direction from the plurality of electrode plates, and the others of the plurality of tabs may extend in a direction different from the one direction from the plurality of electrode plates.

In the first direction, a length of each of the plurality of tabs may be the same as or less than a width of the at least one electrode assembly.

The at least one electrode assembly includes the plurality of tabs extending from the plurality of electrode plates, and at least one extension region defined by an outer edge of the at least one electrode assembly, and the plurality of tabs may not extend beyond the at least one extension region.

The at least one extension region may be arranged on an upper surface or side surface of the at least one electrode assembly.

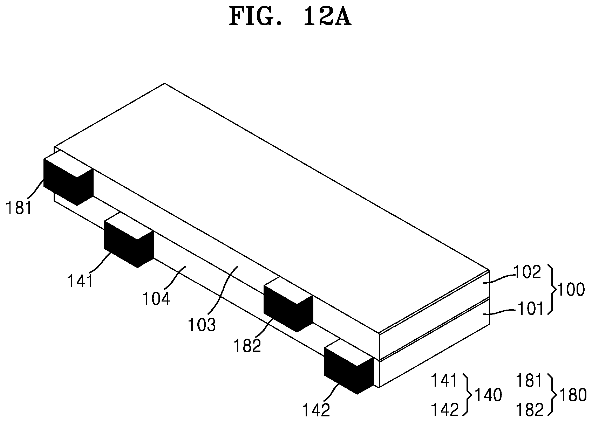

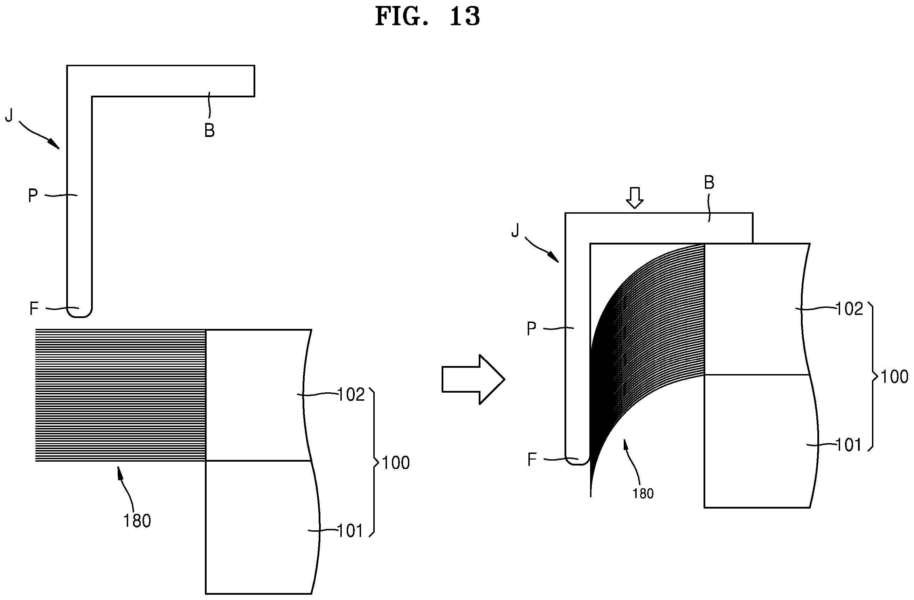

FIGS. 12A to 12F and 13 illustrate a method of manufacturing the electrode assembly 100, according to embodiments.

As shown in FIG. 12A, the electrode assembly 100 is prepared. The first electrode assembly 101 and the second electrode assembly 102 are prepared, and the first electrode assembly 101 and the second electrode assembly 102 are stacked or overlapped. The first electrode assembly 101 and the second electrode assembly 102 may be fixed to each other by using a tape or an adhesive, or through bolting or welding.

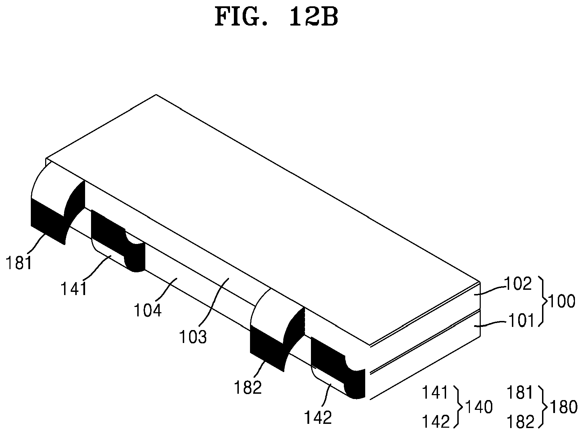

Then, as shown in FIG. 12B, the first tab 140 and the second tab 180 are bent. As described above, the first positive electrode tab 141 and the first negative electrode tab 142 of the first tab 140 are bent in the first bending direction, and the second positive electrode tab 181 and the second negative electrode tab 182 of the second tab 180 are bent in the second bending direction different from the first bending direction. The first positive electrode tab 141 and the first negative electrode tab 142 are bent in the same direction, and the second positive electrode tab 181 and the second negative electrode tab 182 may be bent in the same direction. While the first tab 140 and the second tab 180 are bent, the first tab 140 and the second tab 180 are prevented from protruding to the outside of the electrode assembly 100. The first tab 140 is bent toward the second electrode assembly 102 such that the end of the first tab 140 does not extend beyond the outer edge of the second electrode assembly 102. The second tab 180 is bent toward the first electrode assembly 101 such that the end of the second tab 180 does not extend beyond the outer edge of the first electrode assembly 101.

As shown in FIG. 13, the first tab 140 and the second tab 180 may be bent by using a jig J. The jig J may include a base B, a protruding portion P, and a tip portion F. The protruding portion P may be bent in an end of the base B, and the tip portion F may be formed at an end of the protruding portion P and may be streamlined. For example, as shown in FIG. 13, when the second tab 180 is to be bent, the jig J is moved downward from the second electrode assembly 102 while the electrode assembly 100 is laid down. The jig J is moved in the second bending direction in which the second tab 180 is bent. When the tip portion F of the jig J comes into contact with the second tab 180, the second tab 180 may be bent in the second bending direction, and the upper surface of the second tab 180 may be supported under the protruding portion P. The bent end of the second tab 180 does not protrude to the outside of the electrode assembly 100. Accordingly, it is not necessary to forcibly deform the shape of the second tab 180 by pressing the second tab 180 in an opposite direction so as to prevent the second tab 180 from protruding to the outside of the electrode assembly 100 or to decrease a protruding portion of the second tab 180. Accordingly, the second tab 180 may be bent in a certain shape, may contact the connector 200 with a uniform area, and may maintain a uniform laser welding depth during laser welding with the connector 200, thereby improving welding quality. Although only the second tab 180 has been described with reference to FIG. 13, the first tab 140 may also be bent in the same manner. With respect to the first tab 140, the jig J may be moved upward from the second electrode assembly 102. The jig J may be moved in the first bending direction in which the first tab 140 is bent, thereby bending the first tab 140.

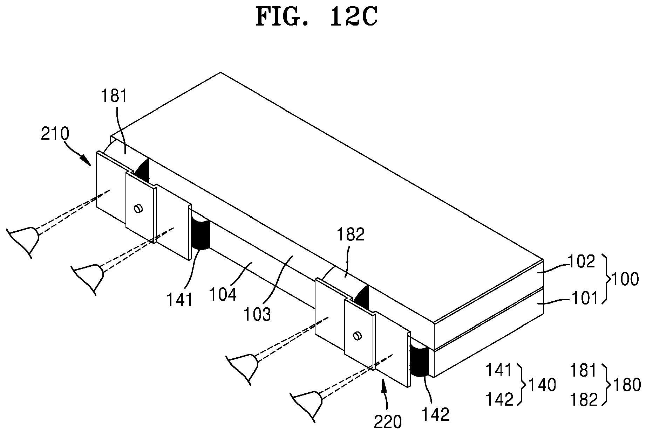

Then, as shown in FIG. 12C, the first connector 210 is laser-welded to the upper surfaces of the first positive electrode tab 141 and second positive electrode tab 181 while the first positive electrode tab 141 and the second positive electrode tab 181 are bent. In addition, the second connector 220 is laser-welded to the upper surfaces of the first negative electrode tab 142 and second negative electrode tab 182 while the first negative electrode tab 142 and the second negative electrode tab 182 are bent. Laser welding may be performed in a bending direction of a tab or in the first direction during the laser welding. Alternatively, line welding may be performed in the second direction. Alternatively, surface welding may be performed. When necessary, a welding state may be determined through vision inspection after welding the tab and the connector 200.

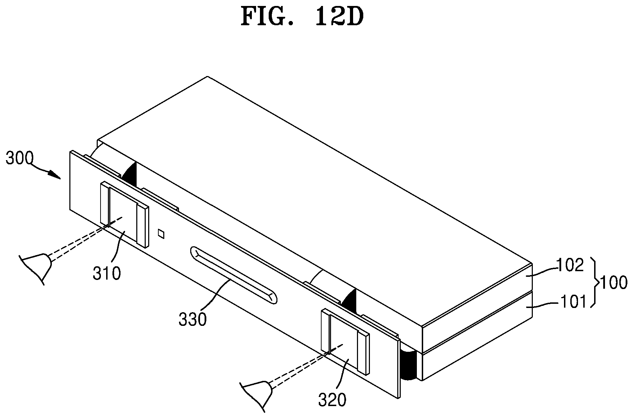

Then, as shown in FIG. 12D, the connector 200 and the cap plate 300 are connected. The groove or the hole formed on the bottom surface of the cap plate 300 is located on the connector 200 to correspond to the protrusion of the first connector 210 and the protrusion of the second connector 220, and the protrusion is coupled to the groove or the hole. Then, laser welding is performed on the first terminal 310 and the second terminal 320 to connect the first connector 210 and the first terminal 310, and to connect the second connector 220 and the second terminal 320. When necessary, a welding state may be determined through vision inspection after welding the connector 200 and the cap plate 300.

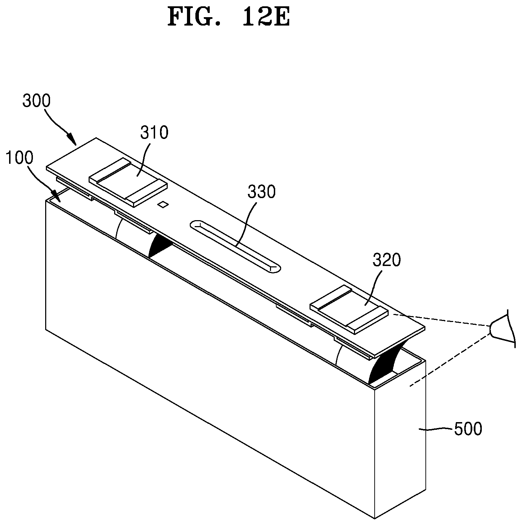

Then, as shown in FIG. 12E, the electrode assembly 100 is surrounded by the protection member 500. The protection member 500 may be wound around the outer surface of the electrode assembly 100, or the electrode assembly 100 may be accommodated in the protection member 500 including an internal space.

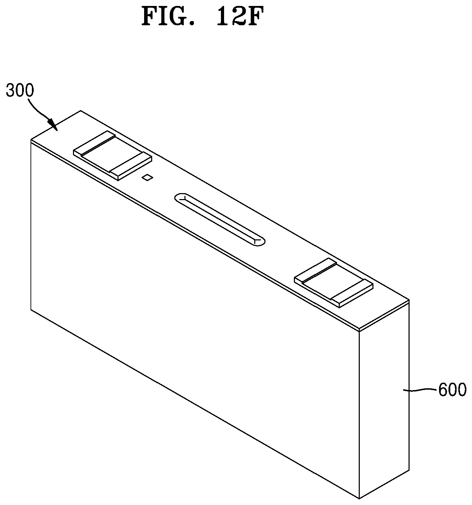

Then, as shown in FIG. 12F, the electrode assembly 100 surrounded by the protection member 500 is inserted into the can 600. Laser welding is performed along the outer edge of the cap plate 300 to seal the opening in the can 600 with the cap plate 300.

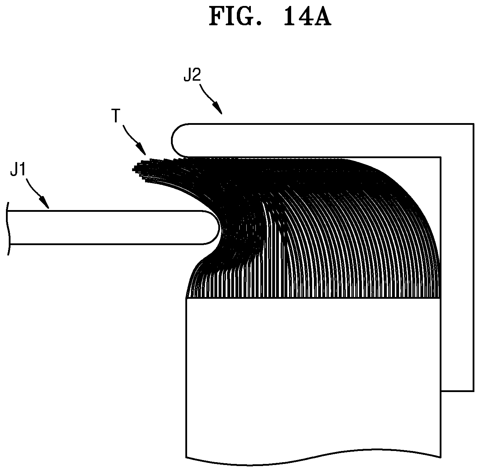

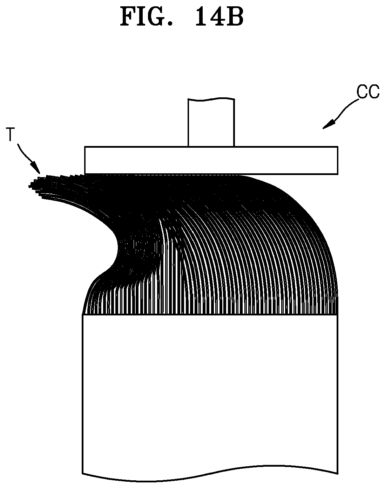

FIGS. 14A and 14B illustrate a method of manufacturing an electrode assembly according to the related art. A second jig J2 moves in a direction in which an electrode tab T is to be bent, and bends the electrode tab T. To reduce a portion of the electrode tab T protruding to the outside of the electrode assembly, a first jig J1 moves in a direction opposite to the bending direction of the electrode tab T to press the electrode tab T. Accordingly, the shape of the electrode tab T is forcibly deformed, and the electrode tab T becomes thicker away from the bending direction. Accordingly, when a current collector plate CC and the electrode tab T are welded, a welding depth is not uniform, and the electrode tab T may protrude to the outside of the current collector plate CC.

According to a secondary battery and a method of manufacturing the secondary battery, according to embodiments, a tab is controlled so as not to protrude to the outside of an electrode assembly, thereby increasing efficiency of manufacturing processes including a tab bending process, and increasing productivity. In addition, because there is no need to forcibly deform the shape of the tab, a welding depth of the tab and a connector may be uniformly maintained, and thus, welding quality may be improved. In addition, by making the length of the tab shorter, capacity of the electrode assembly may be increased.

According to a secondary battery and a method of manufacturing the secondary battery, according to embodiments, since tabs of an electrode assembly do not protrude to the outside of the electrode assembly, the secondary battery may be manufactured without a process of cutting or rolling up the tabs. Accordingly, efficiency of manufacturing processes of the secondary battery may be increased and productivity may be increased.

According to a secondary battery and a method of manufacturing the secondary battery, according to embodiments, a tab may be naturally bent by pressing the tab in a direction in which the tab is to be bent, thereby increasing efficiency of a tab bending process and preventing forced tab shape deformation. Accordingly, durability of the tab may be improved, a contact area between the tab and a connector may be uniformized, and welding quality of the tab and the connector may be improved.

Effects described above are only some of examples of the disclosure, and similar or additional effects may be exhibited by other configurations based on the technical scope of the disclosure. Therefore, effects of the disclosure are not limited to a specific embodiment, and may be variously manifested throughout any configuration according to the scope of the disclosure.

**It** should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A secondary battery (10) comprising:
at least one electrode assembly (100) including a plurality of electrode plates (110, 120) and a plurality of separators (130) between the plurality of electrode plates (110, 120), the plurality of electrode plates (110, 120) including a plurality of tabs (140, 180); and
at least one connector (200) connected to the plurality of tabs (140, 180),
wherein some of the plurality of tabs (140, 180) are bent in a first bending direction, and the others of the plurality of tabs (140, 180) are bent in a second bending direction different from the first bending direction,
the at least one connector (200) is welded on the plurality of tabs (140, 180) that are bent, and
ends of the plurality of tabs (140, 180) do not protrude to outside of the at least one electrode assembly (100) in a first direction parallel to a width direction of the at least one electrode assembly (100).

2. The secondary battery (10) of claim 1, wherein some of the plurality of tabs (140, 180) are located on a first imaginary line (L1) extending in a second direction different from the first direction, and the others of the plurality of tabs (140, 180) are located on a second imaginary line (L2) spaced apart from the first imaginary line (L1) in the first direction and parallel to the first imaginary line (L1), and
from among the plurality of tabs (140, 180), a direction in which tabs on the first imaginary line (L1) are bent is different from a direction in which tabs on the second imaginary line (L2) are bent.

3. The secondary battery (10) of claim 2, wherein the at least one electrode assembly (100) comprises:
a first electrode assembly (101) including a plurality of electrode plates (110, 120) and a plurality of separators (130) between the plurality of electrode plates (110, 120), the plurality of electrode plates (110, 120) including a first positive electrode tab (141) and a first negative electrode tab (142); and
a second electrode assembly (102) including a plurality of electrode plates (110, 120) and a plurality of separators (130) between the plurality of electrode plates (110, 120), the plurality of electrode plates (110, 120) including a second positive electrode tab (181) and a second negative electrode tab (182),
the first positive electrode tab (141) and the first negative electrode tab (142) are located on the first imaginary line (L1), and
the second positive electrode tab (181) and the second negative electrode tab (182) are located on the second imaginary line (L2).

4. The secondary battery (10) of any one of claims 1 to 3, wherein the plurality of tabs (140, 180) extend from the plurality of electrode plates (110, 120) in the same direction, or
some of the plurality of tabs (140, 180) extend from the plurality of electrode plates (110, 120) in one direction, and the others of the plurality of tabs (140, 180) extend from the plurality of electrode plates (110, 120) in a direction different from the one direction.

5. The secondary battery (10) of any one of claims 1 to 4, wherein a length of each of the plurality of tabs (140, 180) in the first direction is less than or equal to a width of the at least one electrode assembly (100).

6. The secondary battery (10) of any one of claims 1, 2, 4, and 5, wherein the at least one electrode assembly (100) comprises:
a first electrode assembly (101) including a plurality of electrode plates (110, 120) and a plurality of separators (130) between the plurality of electrode plates (110, 120), the plurality of electrode plates (110, 120) including a first positive electrode tab (141) and a first negative electrode tab (142); and
a second electrode assembly (102) including a plurality of electrode plates (110, 120) and a plurality of separators (130) between the plurality of electrode plates (110, 120), the plurality of electrode plates (110, 120) including a second positive electrode tab (181) and a second negative electrode tab (182),
the at least one connector (200) comprises:
a first connector (210) connected to the first positive electrode tab (141) and the second positive electrode tab (181); and
a second connector (220) connected to the first negative electrode tab (142) and the second negative electrode tab (182), and
bent ends of the first positive electrode tab (141) and first negative electrode tab (142) do not protrude to outside of the second electrode assembly (102), and bent ends of the second positive electrode tab (181) and second negative electrode tab (182) do not protrude to outside of the first electrode assembly (101).

7. The secondary battery (10) of claim 6, wherein the at least one electrode assembly (100) further comprises a third electrode assembly (109F) adjacent to the second electrode assembly (102) and including a plurality of electrode plates (110, 120) including a third positive electrode tab (191F) and a third negative electrode tab (192F) and a plurality of separators (130) between the plurality of electrode plates (110, 120),
the first connector (210) is connected to the first positive electrode tab (141), the second positive electrode tab (181), and the third positive electrode tab (191F),
the second connector (220) is connected to the first negative electrode tab (142), the second negative electrode tab (182), and the third negative electrode tab (192F), and
the third positive electrode tab (191F) and the third negative electrode tab (192F) are bent toward the first electrode assembly (101), wherein bent ends thereof do not protrude to outside of the first electrode assembly (101).

8. The secondary battery (10) of any one of claims 1, 2, 4, and 5, wherein the at least one electrode assembly (100) comprises an electrode assembly (100) including a plurality of electrode plates (110, 120) and a plurality of separators (130) between the plurality of electrode plates (110, 120), the plurality of electrode plates (110, 120) including a first positive electrode tab (141), a first negative electrode tab (142), a second positive electrode tab (181), and a second negative electrode tab (182),
the at least one connector (200) comprises:
a first connector (210) connected to the first positive electrode tab (141) and the second positive electrode tab (181); and
a second connector (220) connected to the first negative electrode tab (142) and the second negative electrode tab (182), and
bent ends of the first positive electrode tab (141), first negative electrode tab (142), second positive electrode tab (181), and second negative electrode tab (182) do not protrude to outside of the electrode assembly (100).

9. The secondary battery (10) of any one of claims 1 to 8, wherein the plurality of tabs (140, 180) respectively extend from the plurality of electrode plates (110, 120) and the at least one electrode assembly (100) comprises at least one extension region (A) defined by an outer edge of the at least one electrode assembly (100), and
the plurality of tabs do not extend beyond the at least one extension region (A).

10. The secondary battery (10) of claim 9, wherein the at least one extension region (A) is located on an upper surface (103, 104) or a side surface of the at least one electrode assembly (100).

11. A method of manufacturing a secondary battery (10), the method comprising:
preparing at least one electrode assembly (100) including a plurality of electrode plates (110, 120) and a plurality of separators (130) between the plurality of electrode plates (110, 120), the plurality of electrode plates (110, 120) including a plurality of tabs (140, 180);
bending the plurality of tabs (140, 180); and
welding at least one connector (200) on the plurality of tabs (140, 180) that are bent,
wherein the bending of the plurality of tabs (140, 180) comprises bending some of the plurality of tabs (140, 180) in a first bending direction, bending the others of the plurality of tabs (140, 180) in a second bending direction different from the first bending direction, and preventing ends of the plurality of tabs (140, 180) from protruding to outside of the at least one electrode assembly (100) in a first direction parallel to a width direction of the at least one electrode assembly (100).

12. The method of claim 11, wherein the bending of the plurality of tabs (140, 180) comprises, from among the plurality of tabs (140, 180), bending tabs having different polarities in the first bending direction, and bending tabs having a same polarity in the second bending direction.

13. The method of claims 11 or 12, wherein the at least one electrode assembly (100) comprises:
a first electrode assembly (101) including a plurality of electrode plates (110, 120) and a plurality of separators (130) between the plurality of electrode plates (110, 120), the plurality of electrode plates (110, 120) including a first positive electrode tab (141) and a first negative electrode tab (142); and
a second electrode assembly (102) including a plurality of electrode plates (110, 120) and a plurality of separators (130) between the plurality of electrode plates (110, 120), the plurality of electrode plates (110, 120) including a second positive electrode tab (181) and a second negative electrode tab (182),
the at least one connector (200) comprises:
a first connector (210) connected to the first positive electrode tab (141) and the second positive electrode tab (181); and
a second connector (220) connected to the first negative electrode tab (142) and the second negative electrode tab (182), and
the bending of the plurality of tabs (140, 180) comprises preventing bent ends of the first positive electrode tab (141) and first negative electrode tab (142) from protruding to outside of the second electrode assembly (102), and preventing bent ends of the second positive electrode tab (181) and second negative electrode tab (182) from protruding to outside of the first electrode assembly (101).

14. The method of claims 11 or 12, wherein the at least one electrode assembly (100) comprises:
an electrode assembly (100) including a plurality of electrode plates (110, 120) and a plurality of separators (130) between the plurality of electrode plates (110, 120), the plurality of electrode plates (110, 120) including a first positive electrode tab (141), a first negative electrode tab (142), a second positive electrode tab (181), and a second negative electrode tab (182),
the at least one connector (200) comprises:
a first connector (210) connected to the first positive electrode tab (141) and the second positive electrode tab (181); and
a second connector (210) connected to the first negative electrode tab (142) and the second negative electrode tab (182), and
the bending of the plurality of tabs (140, 180) comprises preventing bent ends of the first positive electrode tab (141), first negative electrode tab (142), second positive electrode tab (181), and second negative electrode tab (182) from protruding to outside of the electrode assembly (100).

15. The method of any one of claims 11 to 14, wherein the bending of the plurality of tabs (140, 180) comprises:
moving a jig (J) in the first bending direction to bend a first tab (140) from among the plurality of tabs (140, 180) without pressing the first tab (140) in a direction different from the first bending direction; and
moving the jig (J) in the second bending direction to bend a second tab (180) from among the plurality of tabs (140, 180) without pressing the second tab (180) in a direction different from the second bending direction.
